# EUROPEAN PATENT SPECIFICATION

(11) **EP 3 406 390 B1**
(45) Date of publication and mention of the grant of the patent: **08.04.2020**
(21) Application number: 18740496.7
(22) Date of filing: 05.02.2018
(51) Int. Cl.: B23K 20/12, B23K 103/18, B23K 103/10, B23K 103/08

(54) **METHOD FOR JOINING THIN METAL SHEETS**
VERBINDUNGSVERFAHREN FÜR DÜNNE METALLPLATTEN
PROCÉDÉ D'ASSEMBLAGE DE PLAQUES MINCES MÉTALLIQUES

(30) Priority: 28.03.2017 JP 2017062108
(43) Date of publication of application: 28.11.2018
(73) Proprietor: Kurimoto, Ltd., Osaka-shi, Osaka 550-8580 (JP)
(72) Inventor: GAO Yefei, Osaka-shi Osaka 550-8580 (JP); KOSHI Akihiko, Osaka-shi Osaka 550-8580 (JP); LIAO Jinsun, Osaka-shi Osaka 550-8580 (JP)
(74) Representative: BRP Renaud & Partner mbB Rechtsanwälte Patentanwälte Steuerberater
(86) International application number: PCT/JP2018/003817
(87) International publication number: WO 2018/179840

(56) References cited:
- JP-A- 2000 061 664
- JP-A- 2001 001 165
- JP-A- 2004 195 480
- JP-A- 2009 279 640

## Description

### TECHNICAL FIELD

The present invention relates to a method for joining metal sheets each having a thickness of 2.0 mm or less together, by making the metal sheets overlap with each other, and then heating and pressurizing the overlapping portion to form a joint similar to a butt joint.

### BACKGROUND ART

Recently, metal sheets having a thickness of 2.0 mm or less have been used in various fields. Joining such metal sheets together by butt jointing them according to a known fusion joining method involves many problems: occurrence of burn through and distortion, many restrictions on dimensional accuracy before the joining, etc. A technique for achieving a butt joint of metal sheets in a simple manner is required to solve these problems.

Meanwhile, friction stir welding (FSW) is known as a typical solid-state welding method. The FSW is usually carried out using a rotary tool having a columnar shape and including, at its end, a projection which is called a pin or a probe. Materials to be joined are fastened, with their yet-to-be joined surfaces being in tight contact with each other and with their back surfaces supported on a backing metal plate. To join the materials together, the rotary tool is pressed onto a joint line on the material surfaces, while the rotary tool is rotated at a predetermined speed.

As a result, frictional heat is generated between the rotary tool and the materials to be joined. The frictional heat softens the materials to be joined. Being pressed onto the materials with a predetermined pressure, the rotary tool is gradually plunged into the softened portion of the materials, and the entire pin is immersed in the material eventually. At this time, the rotation of the rotary tool draws a portion of the material around the pin, and causes plastic flow in the portion. Thereafter, the rotary tool is moved along the joint line, while the rotation and pressure are maintained. As a result, the area through which the rotation tool has passed is integrated due to the plastic flow, thereby carrying out the FSW.

In the friction stir welding, alloy sheets are joined at a temperature equal to or lower than the solidus temperature of the alloy. Therefore, the friction stir welding has received attention, as a joining method which may solve, at once, the problems of the known fusion welding, such as inclusion of oxide film and welding deformation. The friction stir welding is characterized in that, for example: it causes very small joint deformation compared to the known arc welding, enabling the improvement of the product quality and the reduction of costs for correcting deformation after joining; it does not need any filler material and consumes a small amount of power, achieving cost reduction and energy saving; and it does not require skilled labor and is easy to automate and robotize. Moreover, the friction stir welding is advantageous in respect of work environment because it does not cause arc discharge, fume, or dust. The friction stir welding is a joining method which has been in use for railway vehicles, ships, aircrafts, and the like, and of which application to automobiles, semiconductor devices, and other fields is under consideration.

However, butt joint of metal sheets by the known friction stir welding involves problems remaining to be solved: e.g., many restrictions on dimensional accuracy before joining, decrease in the thickness of a joint portion due to plunging of the tool, and difficulty in achieving precise positioning of surfaces to be joined.

For example, a method for providing a joined structure which includes two sheet materials butt joined together and has increased joint strength without any decease in the thickness of the joint portion is known from Patent Document 1. In this method, a columnar rotary tool is rotated and pressed onto a surface of a workpiece having a thickness of 0.1 mm to 0.6 mm, where the diameter of the rotary tool is the same as the width of the workpiece. The workpiece is then pressed onto two sheet materials to be joined which have a thickness from 0.4 mm to 1.0 mm and abut against each other on a plane, so that the workpiece is plunged into the sheet materials to a depth ranging from the value obtained by subtracting 0.1 mm from the thickness of the workpiece to the thickness of the workpiece. Consequently, frictional heat is generated between the workpiece and the two sheet materials to be joined, thereby joining the joint surfaces of the workpiece and the sheet materials and the contact surfaces of the sheet materials together.

JP 2009-279640 A discloses a method for joining a first metal sheet having a thickness of 2.0 mm or less and a second metal sheet having a thickness of 2.0 mm or less together, the method comprising overlapping the first and second metal sheets with each other by placing an end portion of the second metal sheet on top of an end portion of the first metal sheet placed on a backing metal plate such that the metal sheets have a predetermined overlapping width and joining the end portions of the first and second metal sheets together by downwardly pressing a rotating rotary tool onto the end portion of the second metal sheet placed on top of the end portion of the first metal sheet and by utilizing frictional heat and pressurizing force generated between the rotating rotary tool and the first and second metal sheets.

### CITATION LIST

### PATENT DOCUMENTS

Patent Document 1: Japanese Unexamined Patent Publication No. 2011-240398

### SUMMARY OF THE INVENTION

### TECHNICAL PROBLEM

However, the prior art provides insufficient solutions to the problems: e.g., many restrictions on dimensional accuracy before joining and difficulty in achieving precise positioning of surfaces to be joined.

In view of the foregoing problems, it is therefore an object of the present invention to make it possible to join even thin metal sheets together with ease and improved quality.

### SOLUTION TO THE PROBLEM

To achieve the above object, according to the present invention, on top of an end portion of a first metal sheet, an end portion of a second metal sheet is placed such that the metal sheets have a predetermined overlapping width, and a rotating tool is pressed onto the overlapping portion, thereby joining the first and second metal sheets together.

A first aspect of the present invention is directed to a method according to claim 1.

With this configuration, only plastic flow is caused by frictional heat generated between the rotating tool and the material to be joined and by the rotation of the tool, and no fusion is allowed to occur. As a result, occurrence of burn through and distortion is reduced, enabling even thin metal materials to be joined together. The end portions of the metal sheets are overlapped each other in advance, and then joined together with the rotary tool pressed downwardly onto the overlapping portion. This can make the resultant joint portion thicker than each of the metal sheets. As a result, the joint portion is substantially prevented from decreasing in tensile strength from the tensile strength of the base material.

Moreover the rotary tool is not descended excessively, and joining is carried out in a large area including the overlapping portion. This contributes to the maintenance of joint strength, while substantially minimizing distortion of the metal sheets. This also reduces degradation of the external appearance of the backside of the first metal sheet. Note that the "descent distance" refers to a distance by which the contact surface of the rotary tool is plunged from the position at which the contact surface initially comes in contact with the second metal sheet.

A second aspect of the present invention is an embodiment of the first aspect. In the second aspect, the second metal sheet is thicker than the first metal sheet.

With this configuration, joining is carried out in a state where the thinner metal sheet is placed under the other metal sheet. This enables the metal sheets to be joined effectively through making the descent distance of the rotary tool as long as possible and substantially preventing degradation of finished quality of the bottom surfaces of both metal sheets.

A third aspect of the present invention is an embodiment of any one of the first to second aspects. In the third aspect, the rotary tool includes a substantially flat contact surface having no pin.

This configuration avoids the occurrence of a situation where a pin is repelled by the backing metal plate and the metal sheets are joined poorly.

### ADVANTAGES OF THE INVENTION

As can be seen from the foregoing description, according to the present invention, the first metal sheet is placed on a backing metal plate, and an end portion of a second metal sheet is paced on top of an end portion of the first metal sheet such that the ends of the end portions are spaced apart from each other by a predetermined distance in side view. The end portions of the first and second metal sheets are joined together by downwardly pressing a rotating rotary tool onto the second metal sheet overlapping with the first metal sheet and by utilizing frictional heat and pressuring force generated between the rotating tool and a material to be joined. Thus, the present invention makes it possible to join even thin metal sheets together with ease and improved quality.

### BRIEF DESCRIPTION OF THE DRAWINGS

[FIG. 1] FIG. 1 generally shows a method for joining metal sheets together according to an embodiment of the present invention.
[FIG. 2] FIG. 2 is a photograph showing the external appearance of a cross section of a joint between 0.6 mm thick galvanized steel sheets and an area adjacent to the joint.
[FIG. 3] FIG. 3 is a table showing the thicknesses of points indicated in FIG. 2.
[FIG. 4A] FIG. 4A is a photograph showing the sectional structure of a joint formed between 0.6 mm thick galvanized steel sheets and finished with mechanical polish.
[FIG. 4B] FIG. 4B is a photograph showing the sectional structure of the joint formed between 0.6 mm thick galvanized steel sheets and finished with mechanical polish and etching.
[FIG. 5] FIG. 5 is a graph showing ranges of parameters of a joint between 0.6 mm thick galvanized steel sheets.
[FIG. 6] FIG. 6 is a graph showing tensile strengths of joints between 0.6 mm thick galvanized steel sheets (SPCC), according to the parameters shown in FIG. 5.
[FIG. 7A] FIG. 7A is a photograph showing the appearance of the upper surface of a joint between 2.0 mm thick sheets of an aluminum alloy, according to Example 1.
[FIG. 7B] FIG. 7B is a photograph showing the appearance of a cross section of the joint between the 2.0 mm thick sheets of the aluminum alloy, according to Example 1.
[FIG. 8] FIG. 8 is a photograph showing the appearance of the upper surface of a joint between 2.0 mm thick sheets of a magnesium alloy, according to Example 2.
[FIG. 9A] FIG. 9A is a photograph showing the appearance of the upper surface of a joint between a 2.0 mm thick sheet of a magnesium alloy and a 2.0 mm thick sheet of an aluminum alloy, according to Example 3.
[FIG. 9B] FIG. 9B is a photograph showing the appearance of a cross section of the joint between the 2.0 mm thick sheet of the magnesium alloy and the 2.0 mm thick sheet of the aluminum alloy, according to Example 3.
[FIG. 10A] FIG. 10A is a photograph showing the appearance of the upper surface of a joint between a 0.6 mm thick galvanized steel sheet and a 1.0 mm thick galvanized steel sheet, according to Example 4.
[FIG. 10B] FIG. 10B is a photograph showing the appearance of the bottom surface of the joint between the 0.6 mm thick galvanized steel sheet and the 1.0 mm thick galvanized steel sheet, according to Example 4.
[FIG. 10C] FIG. 10C is a photograph showing the appearance of a cross section of the joint between the 0.6 mm thick galvanized steel sheet and the 1.0 mm thick galvanized steel sheet, according to Example 4.
[FIG. 11A] FIG. 11A is a photograph showing the appearance of the upper surface of a joint between a 0.6 mm thick galvanized steel sheet and a 2.0 mm thick sheet of a magnesium alloy, according to Example 5.
[FIG. 11B] FIG. 11B is a photograph showing the appearance of the bottom surface of the joint between the 0.6 mm thick galvanized steel sheet and the 2.0 mm thick sheet of the magnesium alloy, according to Example 5.
[FIG. 11C] FIG. 11C is a photograph showing the appearance of a cross section of the joint between the 0.6 mm thick galvanized steel sheet and the 2.0 mm thick sheet of the magnesium alloy, according to Example 5.
[FIG. 12A] FIG. 12A is a photograph showing the appearance of the upper surface of a joint between a 0.6 mm thick galvanized steel sheet and a 2.0 mm thick sheet of an aluminum alloy, according to Example 6.
[FIG. 12B] FIG. 12B is a photograph showing the appearance of the bottom surface of the joint between the 0.6 mm thick galvanized steel sheet and the 2.0 mm thick sheet of the aluminum alloy, according to Example 6.

### DESCRIPTION OF EMBODIMENTS

Embodiments of the present invention will now be described with reference to the drawings.

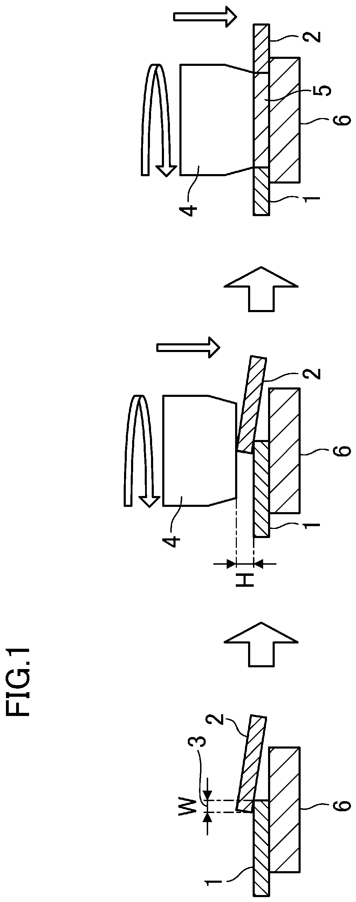

FIG. 1 generally shows a method for joining metal sheets together, according to an embodiment of the present invention. As shown in FIG. 1, first, the method of this embodiment includes overlapping a first metal sheet 1 and a second metal sheet 2 each other on a backing metal plate 6. Specifically, an end portion of the first metal sheet 1 and an end portion of the second metal sheet 2 are overlapped each other such that the ends of the end portions are spaced apart from each other by a predetermined distance, i.e., such that the metal sheets have an overlapping width W of, for example, about 1 mm to 5 mm.

Next, joining is carried out in the overlapping portion 3 where the end portions of the first and second metal sheets 1 and 2 overlap each other, using a rotary tool 4. Unlike tools used in ordinary joining processes, the rotary tool 4 for use in this embodiment has a flat contact surface, and is not provided with a pin extending from the center of its shoulder.

During the joining, the first and second metal sheets 1 and 2 are heated to, for example, a temperature lower than their melting point(s) by about 20% to 50%. Consequently, the hardness of the first metal sheet 1 and the hardness of the second metal sheet 2 are reduced, and plastic flow easily occurs due to the effect of the rotation of the rotary tool 4. As a result, the end portion of the second metal sheet 2 is joined to the end portion of the first metal sheet 1 due to the plastic flow, and a joint having a joint portion 5 similar to a butt joint is formed.

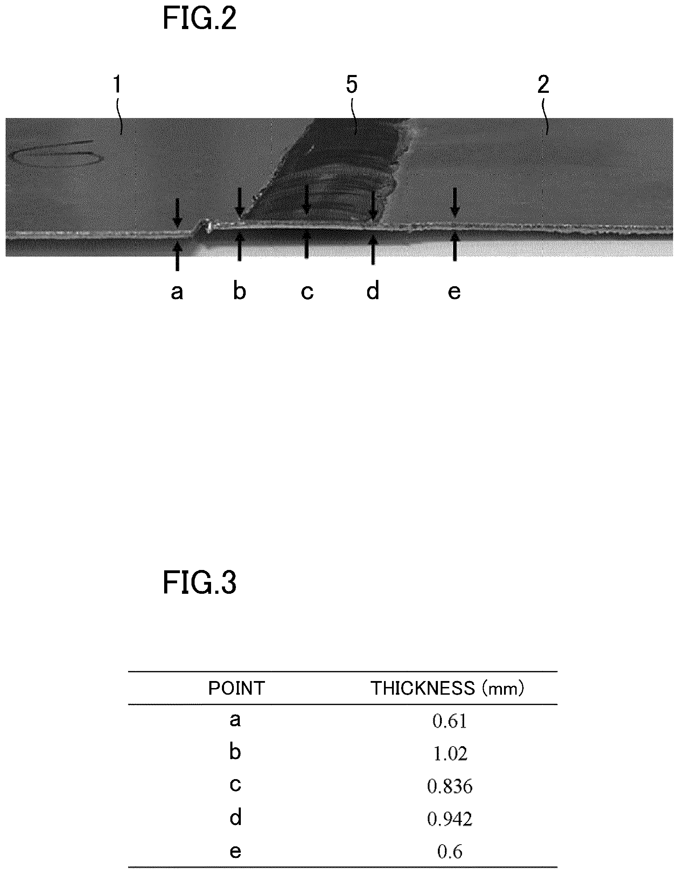

FIG. 2 is an exemplary photograph showing the external appearance of a cross section of an actual joint between 0.6 mm thick galvanized steel sheets (SPCC) and an area adjacent to the joint. In that case, the diameter of the experimental rotary tool 4 was 15 mm, the lead angle (inclination angle) of the rotary tool 4 was 1°, the overlapping width was 4 mm, the insertion depth H of the rotary tool 4 was 0.5 mm, the rotary tool 4 rotated at 2000 rpm, and the joining speed was 60 mm/min.

The rotary tool 4 was plunged into the joint portion 5 to reduce the thickness of the joint portion 5 to a thickness approximate to that of the first and second metal sheets 1 and 2. FIG. 3 specifically shows the thicknesses at the points indicated in FIG. 2. As can be seen from FIGS. 2 and 3, the thickness of the joint portion 5 is not allowed to be thinner than 0.6 mm, which is the thickness of the first and second metal sheets 1 and 2.

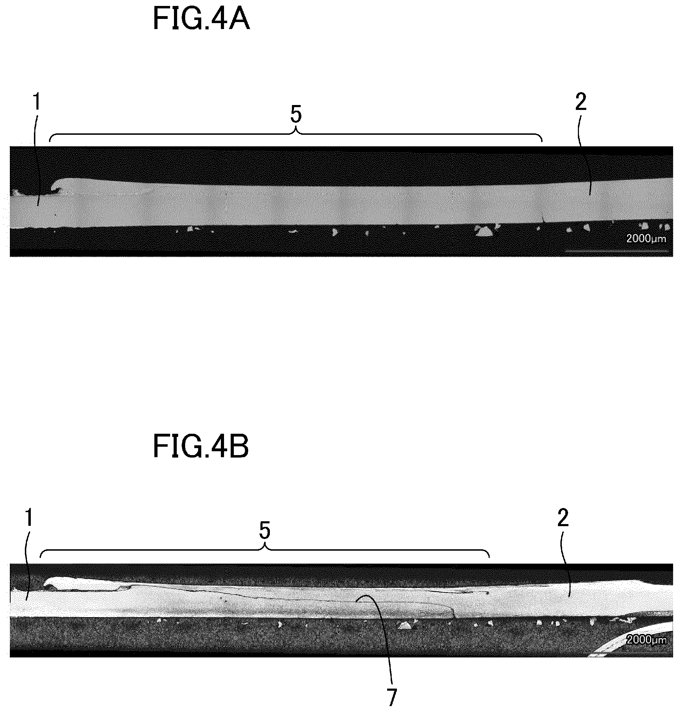

FIG. 4A is a photograph showing the sectional structure of a joint formed between 0.6 mm thick galvanized steel sheets (SPCC) and finished with mechanical polish only. FIG. 4B is a photograph showing the sectional structure of a joint formed between 0.6 mm thick galvanized steel sheets (SPCC) and finished with mechanical polish and etching. These joints differ from each other only in the finishing process after joining, and in both cases, it can be seen that the lap joint interface structure is formed due to plastic deformation of the first and second metal sheets 1 and 2. Particularly in FIG. 4B, the presence of a planar interface 7 is visually observed.

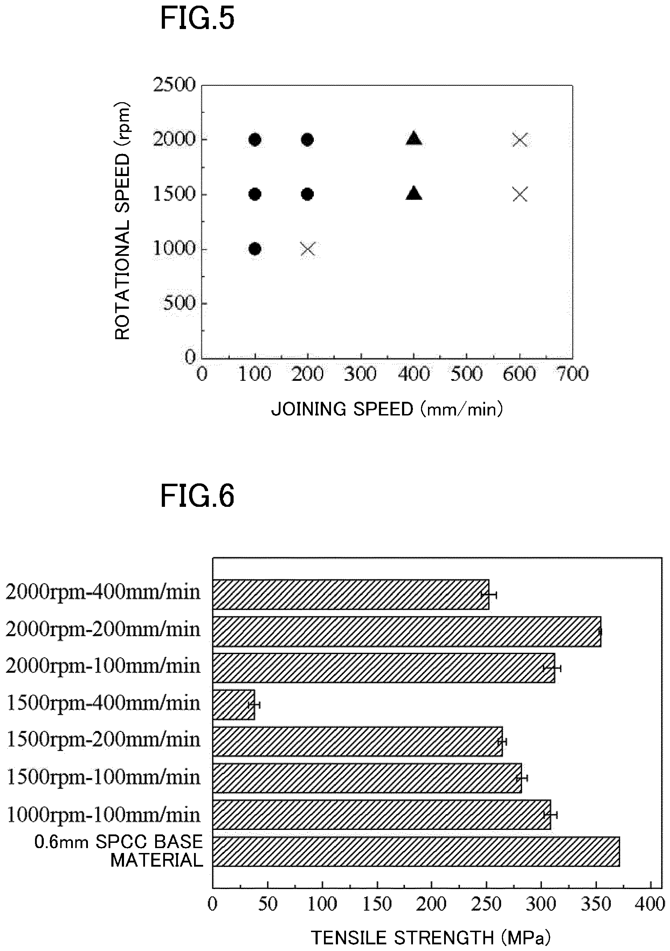

FIG. 5 shows ranges of parameters for joining 0.6 mm thick galvanized steel sheets (SPCC) together. The diameter of the experimental rotary tool 4 is 15 mm, the lead angle of the rotary tool 4 is 1°, the overlapping width W is 4 mm, and the insertion depth H of the rotary tool 4 is 0.5 mm. A filled circle indicates a joint in a good state, a filled triangle indicates a joint having a step on its back surface, and a cross indicates unsatisfactory joining. That is, it has been found that a good joint can be obtained by advancing the rotary tool 4 within a range of joining speed not excessively fast, while the rotary tool 4 is kept rotating at a suitable rotational speed and applying pressurizing force.

FIG. 6 shows tensile strengths of joints between 0.6 mm thick galvanized steel sheets (SPCC), according to the parameters shown in FIG. 5. The maximum tensile strength of the good joint is about 95% of the tensile strength of the base material.

Next, further specific examples 1 to 6 of the method for joining metal sheets together of this embodiment will be described.

### (Example 1)

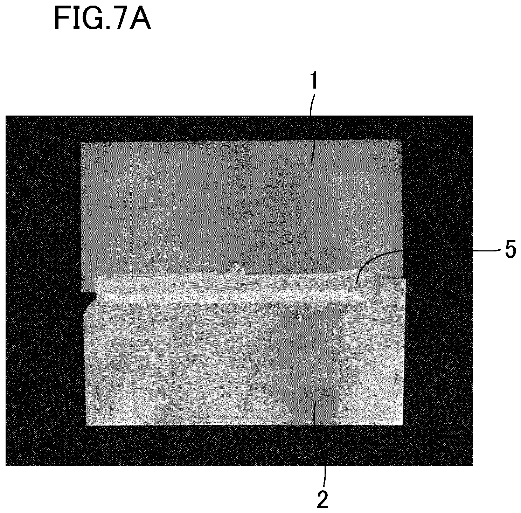

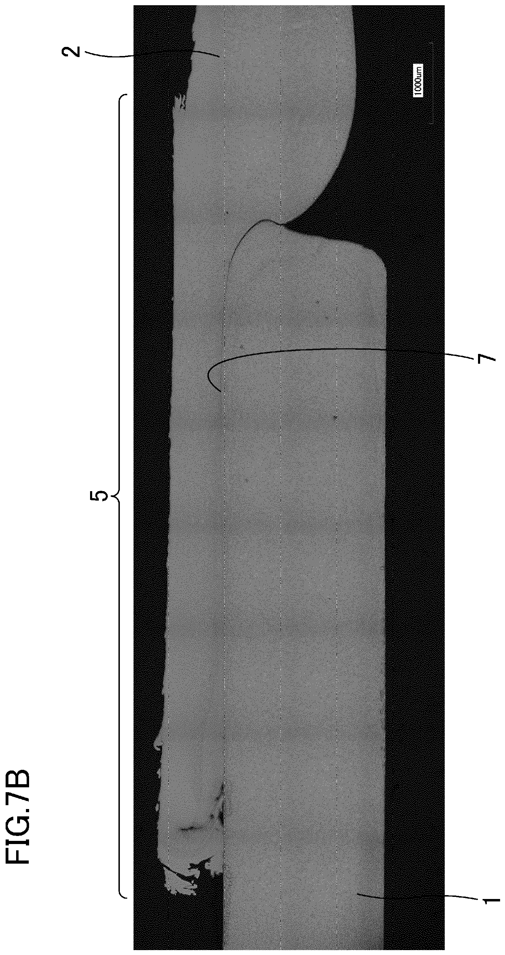

As shown in FIGS. 7A and 7B, 2.0 mm thick sheets of an aluminum alloy (aluminum die casting ADC 12) were joined together. The rotary tool 4 was rotated at 1000 rpm, the joining speed was 500 mm/min, and the insertion depth of the rotary tool 4 was 1.85 mm.

In this example, in which the first metal sheet 1 and the second metal sheet 2 both made of the same light metal alloy (i.e., the aluminum alloy) and having the same thickness were joined together, the resultant joint was also in good state without any decrease in the thickness. FIG. 7B shows a cross section in which an interface 7 between the first and second metal sheets 1 and 2 is apparent.

### (Example 2)

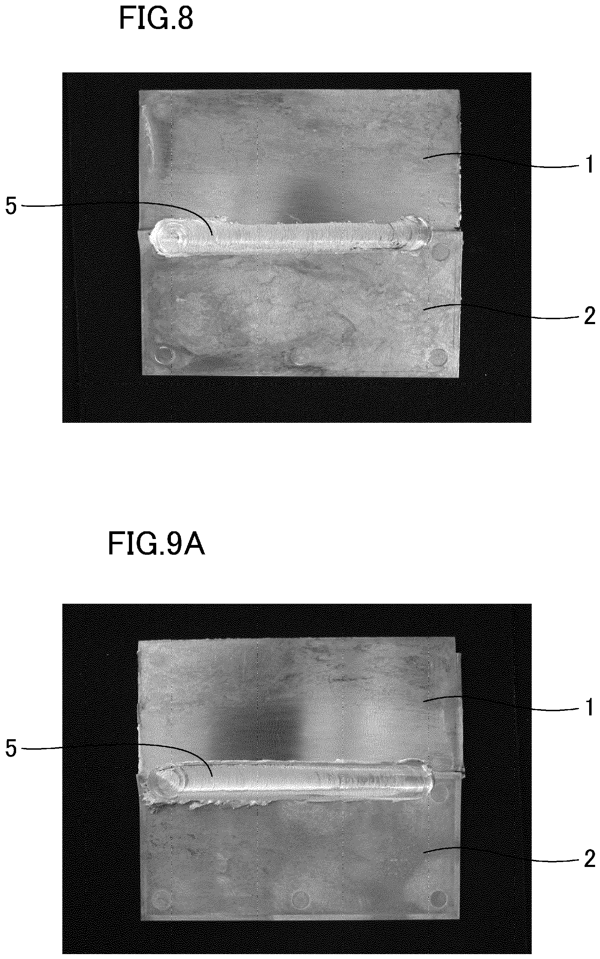

As shown in FIG. 8, 2.0 mm thick sheets of a magnesium alloy (an AM system alloy) were joined together. The rotary tool 4 was rotated at 2000 rpm, the joining speed was 100 mm/min, and the insertion depth of the rotary tool 4 was 1.85 mm.

In this example, in which the first metal sheet 1 and the second metal sheet 2 both made of the same light metal alloy (i.e., the magnesium alloy) and having the same thickness were joined together, the resultant joint was also in good state without any decrease in the thickness. Although not shown, an interface 7 between the first and second metal sheets 1 and 2 is observed in a cross section also in this example.

### (Example 3)

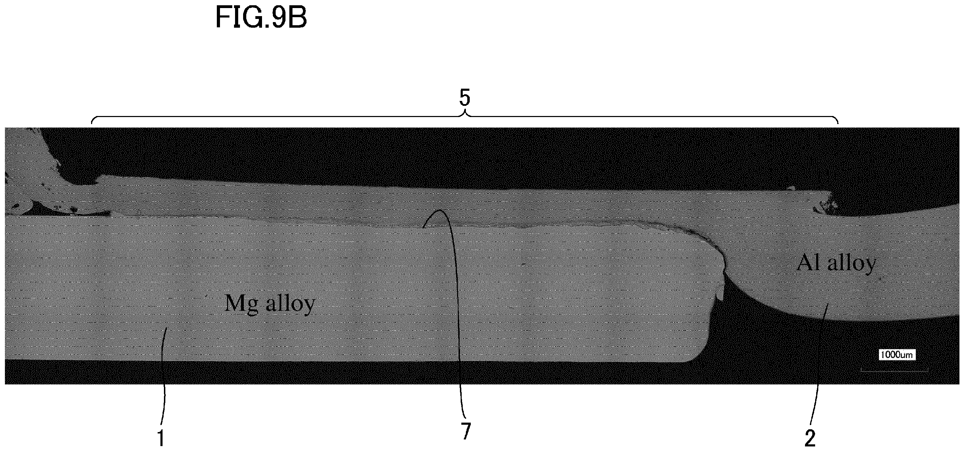

As shown in FIGS. 9A and 9B, a 2.0 mm thick sheet of a magnesium alloy (an AM system alloy; first metal sheet 1) and a 2.0 mm sheet of an aluminum alloy (ADC 12; second metal sheet 2) were joined together. The rotary tool 4 was rotated at 2000 rpm, the joining speed was 100 mm/min, and the insertion depth of the rotary tool 4 was 1.85 mm.

In this example, in which the first metal sheet 1 and the second metal sheet 2 made of different light metal alloys and having the same thickness were joined together, the resultant joint was also in good state without any decrease in the thickness. As shown in FIG. 9B, an interface 7 between the first and second metal sheets 1 and 2 is apparent in a cross section also in this example.

### (Example 4)

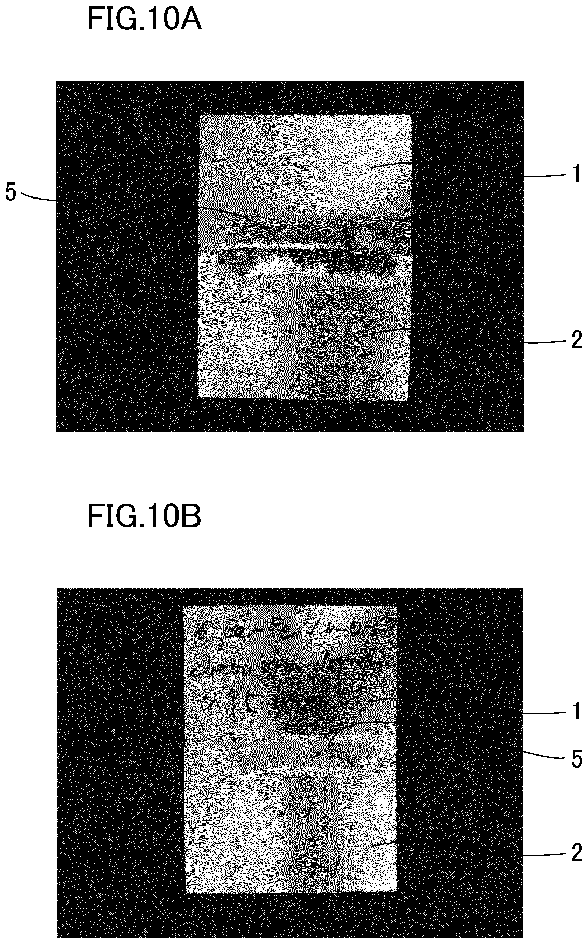

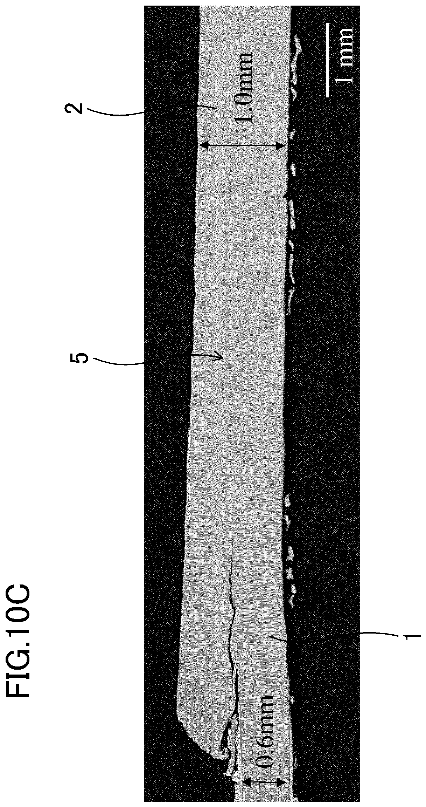

As shown in FIGS. 10A, 10B, and 10C, a 0.6 mm thick galvanized steel sheet (first metal sheet 1) and a 1.0 mm thick galvanized steel sheet (second metal sheet 2) were joined together. The rotary tool 4 was rotated at 2000 rpm, the joining speed was 100 mm/min, and the insertion depth of the rotary tool 4 was 0.95 mm.

Specifically, in the case where the first and second metal sheets 1 and 2 had different thicknesses, the thicker one was used as the second metal sheet 2 that is upper one when they were overlapped with each other, and the insertion depth H of the rotary tool 4 was set to be smaller than the thickness of the thicker second metal sheet 2. Carrying out the joining in the state where the thinner first metal sheet 1 was placed under the second metal sheet 2 enabled the metal sheets 1 and 2 to be joined effectively, while making the insertion depth H of the rotary tool 4 as large as possible and substantially preventing degradation of finished quality of the bottom surfaces of both metal sheets 1 and 2.

### (Example 5)

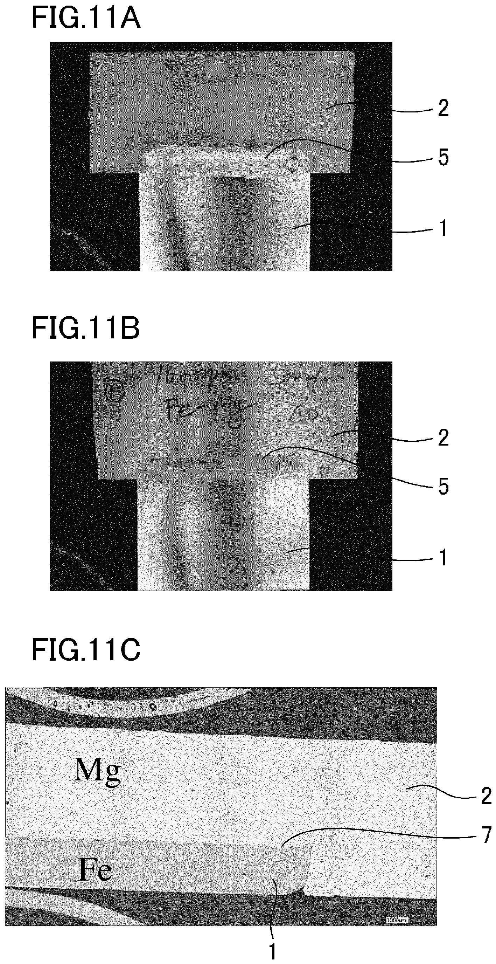

As shown in FIGS. 11A, 11B, and 11C, a 0.6 mm thick galvanized steel sheet (first metal sheet 1) and a 2.0 mm thick sheet of a magnesium alloy (second metal sheet 2) were joined together. The rotary tool 4 was rotated at 1000 rpm, the joining speed was 50 mm/min, and the insertion depth of the rotary tool 4 was 1.0 mm.

Specifically, in the case where the first and second metal sheets 1 and 2 had different thicknesses, the thicker one was used as the second metal sheet 2 that was upper one when they were overlapped with each other, and the insertion depth H of the rotary tool 4 was set to be smaller than the thickness of the thicker second metal sheet 2 and larger than the thickness of the thinner first metal sheet 1. Carrying out the joining in the state where the thinner first metal sheet 1 was placed under the second metal sheet 2 enabled the metal sheets 1 and 2 to be joined effectively, while making the insertion depth H of the rotary tool 4 as large as possible and substantially preventing degradation of finished quality of the bottom surfaces of both metal sheets 1 and 2.

The rotating tool was pressed onto the second metal sheet 2 made of the magnesium alloy having a low tensile strength, and then, the second metal sheet 2 was joined to the first metal sheet 1 made of the galvanized steel sheet having a high tensile strength. This resulted in firm joining in which a clear interface 7 was apparent, as shown in FIG. 11C.

### (Example 6)

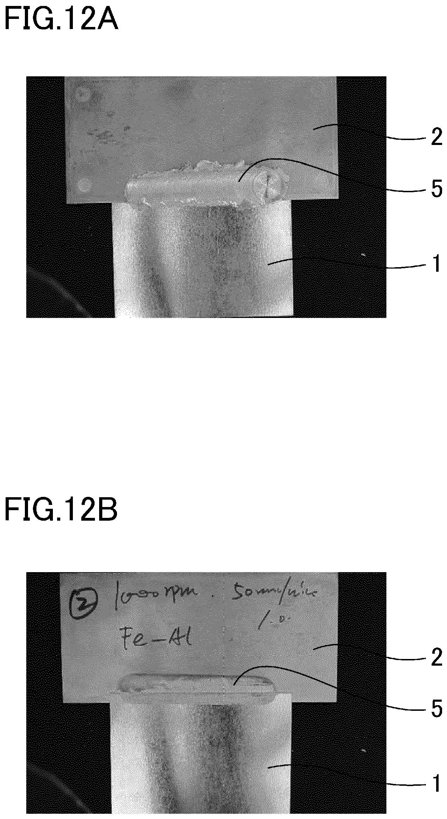

As shown in FIGS. 12A and 12B, a 0.6 mm thick galvanized steel sheet (first metal sheet 1) and a 2.0 mm thick sheet of an aluminum alloy (second metal sheet 2) were joined together. The rotary tool 4 was rotated at 1000 rpm, the joining speed was 50 mm/min, and the insertion depth of the rotary tool 4 was 1.0 mm.

Specifically, in this example where the first and second metal sheets 1 and 2 had different thicknesses, the thicker one was used as the second metal sheet 2 that was upper one when they were overlapped with each other, and the insertion depth H of the rotary tool 4 was set to be smaller than the thickness of the thicker second metal sheet 2 and larger than thickness of the thinner first metal sheet 1. Carrying out the joining in the state where the thinner first metal sheet 1 was placed under the second metal sheet 2 and by utilizing frictional heat and pressurizing force that were generated between the rotating tool and the material to be joined enables the metal sheets to be joined effectively, while substantially preventing degradation of finished quality of the bottom surfaces of both the first and second metal sheets 1 and 2 and making the insertion depth H of the rotary tool 4 as large as possible.

The rotating tool was pressed onto the second metal sheet 2 made of the aluminum alloy having a low tensile strength, and then, the second metal sheet 2 was joined to the first metal sheet 1 made of the galvanized steel sheet having a high tensile strength. As a result, the first and second metal sheets were joined firmly.

### (Comparative Examples and Conclusion)

Although not shown in detail, comparative examples for comparison with the examples 5 and 6 were prepared. Specifically, in one comparative example, contrary to the example 5, the magnesium alloy sheet and the galvanized steel sheet were used respectively as the first and second metal sheets 1 and 2. In the other comparative example, contrary to the example 6, the aluminum alloy sheet and the galvanized steel sheet were used respectively as the first and second metal sheets 1 and 2. For each of the comparative examples, an experiment was conducted in the following manner. The rotary tool 4 was first pressed onto the second metal sheet 2 made of the galvanized steel sheet in order to join the second metal sheet 2 to the first metal sheet 1 made of the light metal. However, the resultant joint portion had a significant step in both comparative examples.

In contrast, the joint portion between the metal sheets joined by each of the methods described in the examples 1 to 6 was in a good state without any decrease in the thickness. In addition, the examples exhibited good results in tensile test.

As can be seen from the foregoing description, according to this embodiment, only plastic flow is caused by frictional heat generated between the rotating tool and the material to be joined and by the rotation of the tool, and no fusion is allowed to occur. As a result, occurrence of burn through and distortion is reduced. The end portions of the metal sheets 1 and 2 are overlapped each other in advance, and joining is carried out by pressing the rotary tool 4 downwardly onto the overlapping portion 3. This can make the joint portion 5 thicker than each of the metal sheets 1 and 2. As a result, the joint portion is substantially prevented from decreasing in tensile strength from the tensile strength of the base material.

The rotary tool 4 is not descended excessively, and plastic flow is caused in a large area, of the material to be joined, including the overlapping portion. This contributes to the maintenance of joint strength, while substantially preventing the distortion of the metal sheets 1 and 2. This also reduces degradation of the external appearance of the backside of the first metal sheet 1 that is under the second metal sheet 2.

Moreover, the joining is achieved to the extent that the planar interface 7 remains, reducing the occurrence of distortion and the degradation of external appearance.

### (Other Embodiments)

The above embodiment of the present invention may be configured as follows.

In the embodiment described above, various examples of the first and second metal sheets 1 and 2 have been described as examples. However, the thickness of the first and second metal sheets 1 and 2 is not particularly limited to any specific thickness, provided that the thickness is 2 mm or less.

The foregoing embodiments are merely preferable examples in nature.

### DESCRIPTION OF REFERENCE CHARACTERS

- 1: First Metal Sheet
- 2: Second Metal Sheet
- 3: Overlapping Portion
- 4: Rotary Tool
- 5: Joint Portion
- 6: Backing Metal Plate
- 7: Interface
- H: Insertion Depth
- W: Overlapping Width (Predetermined Length)

## Claims

1. A method of joining a first metal sheet (1) having a thickness of 2.0 mm or less and a second metal sheet (2) having a thickness of 2.0 mm or less together, the method comprising:
overlapping the first and second metal sheets (1,2) with each other by placing an end portion of the second metal sheet (2) on top of an end portion of the first metal sheet (1) placed on a backing metal plate (6) such that the metal sheets (1,2) have a predetermined overlapping width (W),
and joining the end portions of the first and second metal sheets (1,2) together by downwardly pressing a rotating rotary tool (4) onto the end portion of the second metal sheet (2) placed on top of the end portion of the first metal sheet (1) and by utilizing frictional heat and pressurizing force generated between the rotating rotary tool (4) and the first and second metal sheets (1,2),
**characterized in that**
the rotary tool (4) includes a contact surface having a diameter which is larger than the predetermined distance, (W) and
the rotary tool (4) is inserted to an insertion depth which is smaller than a thickness of the second metal sheet (2).

2. The method of claim 1, wherein the second metal sheet (2) is thicker than the first metal sheet (1).

3. The method of claim 1 or 2, wherein the rotary tool (4) includes a substantially flat contact surface having no pin.

## Patentansprüche

1. Verfahren zum Zusammenfügen eines ersten Metallblechs (1), das eine Dicke von 2,0 mm oder weniger aufweist, und eines zweiten Metallblechs (2), das eine Dicke von 2,0 mm oder weniger aufweist, wobei das Verfahren folgende Schritte umfasst:
Überlappen der ersten und zweiten Metallbleche (1, 2) miteinander, indem ein Endabschnitt des zweiten Metallblechs (2) oben auf einen Endabschnitt des ersten Metallblechs (1), der auf einer metallischen Unterlage (6) liegt, gelegt wird, so dass die Metallbleche (1, 2) eine vorbestimmte Überlappungsbreite (W) aufweisen,
Zusammenfügen der Endabschnitte der ersten und zweiten Metallbleche (1, 2), indem ein drehendes Drehwerkzeug (4) auf den Endabschnitt des zweiten Metallblechs (2), das oben auf dem Endabschnitt des ersten Metallblechs (1) liegt, nach unten gepresst wird, und indem Reibungswärme und Presskraft, die zwischen dem drehenden Drehwerkzeug (4) und den ersten und zweiten Metallblechen (1, 2) entstehen, verwendet werden,
**dadurch gekennzeichnet, dass**
das Drehwerkzeug (4) eine Kontaktfläche umfasst, die einen Durchmesser aufweist, der größer als der vorbestimmte Abstand (W) ist, und
das Drehwerkzeug (4) bis auf eine Einfügungstiefe eingefügt wird, die kleiner als eine Dicke des zweiten Metallblechs (2) ist.

2. Verfahren nach Anspruch 1, wobei das zweite Metallblech (2) dicker als das erste Metallblech (1) ist.

3. Verfahren nach Anspruch 1 oder 2, wobei das Drehwerkzeug (4) eine im Wesentlichen flache Kontaktfläche ohne Stift aufweist.

## Revendications

1. Procédé pour assembler une première feuille métallique (1) ayant une épaisseur de 2,0 mm ou moins et une seconde feuille métallique (2) ayant une épaisseur de 2,0 mm ou moins, le procédé comprenant :
la superposition des première et seconde feuilles métalliques (1, 2) l'une à l'autre en plaçant une partie extrémité de la seconde feuille métallique (2) sur une partie extrémité de la première feuille métallique (1) placée sur une plaque métallique de support (6) de telle sorte que les feuilles métalliques (1, 2) ont une largeur de superposition prédéterminée (W), et
l'assemblage des parties extrémité des première et seconde feuilles métalliques (1, 2) en pressant vers le bas un outil rotatif (4) sur la partie extrémité de la seconde feuille métallique (2) placée sur la partie extrémité de la première feuille métallique (1) et en utilisant la chaleur de friction et la force de pression générées entre l'outil rotatif (4) et les première et seconde feuilles métalliques (1, 2),
**caractérisé en ce que**
l'outil rotatif (4) comprend une surface de contact ayant un diamètre supérieur à la distance prédéterminée (W), et
l'outil rotatif (4) est inséré à une profondeur d'insertion qui est inférieure à une épaisseur de la seconde feuille métallique (2).

2. Procédé selon la revendication 1, dans lequel la seconde feuille métallique (2) est plus épaisse que la première feuille métallique (1).

3. Procédé selon la revendication 1 ou 2, dans lequel l'outil rotatif (4) comprend une surface de contact sensiblement plate ne présentant pas de goupille.
